# NEUE EUROPÄISCHE PATENTSCHRIFT

(11) **EP 2 902 086 B2**
(45) Veröffentlichungstag und Bekanntmachung des Hinweises auf die Entscheidung über den Einspruch: **06.05.2020**
(45) Hinweis auf die Patenterteilung: 01.11.2017
(21) Anmeldenummer: 14193914.0
(22) Anmeldetag: 19.11.2014
(51) Int. Cl.: B01D 39/00, B01J 20/08, C02F 1/28

(54) **Filter zur Sterilisation von Wasser**
Filter for the sterilization of water
Filtre de stérilisation de l'eau

(30) Priorität: 31.01.2014 DE 102014101187
(43) Veröffentlichungstag der Anmeldung: 05.08.2015
(73) Patentinhaber: Grünbeck Wasseraufbereitung GmbH, 89420 Höchstädt a.d. Donau (DE)
(72) Erfinder: Söcknick, Ralf, Dr., 70806 Kornwestheim (DE)
(74) Vertreter: Charrier Rapp & Liebau

(56) Entgegenhaltungen:
- EP-A2- 1 923 117
- WO-A1-97/41941
- WO-A1-99/15259
- WO-A1-03/000407
- WO-A1-03/064013
- DE-A1- 2 510 467
- DE-A1- 19 834 916
- FR-A1- 2 824 758
- GB-A- 1 582 758
- US-A1- 2005 023 211
- US-A1- 2009 311 420
- US-A1- 2013 056 428
- US-B1- 6 280 824
- WEGMANN ET AL: "Modification of ceramic microfilters with colloidal zirconia to promote the adsorption of viruses from water", WATER RESEARCH, ELSEVIER, AMSTERDAM, NL, Bd. 42, Nr. 6-7, 25. Oktober 2007 (2007-10-25), Seiten 1726-1734, XP022523717, ISSN: 0043-1354
- PURCHAS, D.B. et al.: "Handbook of filter media", 2002, Elsevier pages 135-151,
- "Adsorption Technology in Water Treatment" In: WORCH, E. et al.: "Adsorption Technology in Water Treatment. Fundamentals, Processes and Modeling", 2012, De Gruyter, Berlin /Boston pages 16-17,34-40,
- "Chapter 1" In: HUTTEN, I.M.: "Handbook of Nonwoven Filter Media", 2007, Elsevier, Oxford, Butter-worth-Heinemann pages 1-28,
- TEPPER, F. et al.: "High Performance Turbidity Filter", Water Conditioning & Purification, 28 February 2005 (2005-02-28), pages 55-57,
- TEPPER, F. et al.: "A High-Performance Electropositive Filter", Bio- Process International, June 2006 (2006-06), pages 64-68,

## Beschreibung

Die Erfindung betrifft einen Filter zur Sterilisation von Wasser gemäß Anspruch 1.

Aus dem Stand der Technik sind unterschiedliche Filter und Filtrationsverfahren bekannt, um Partikel aus einer Flüssigkeit, wie z.B. Wasser, zu filtrieren. So ist es beispielsweise bekannt, eine zu filtrierende Flüssigkeit durch einen Filter mit einem porösen Filtermedium durchzuleiten, wobei das Filtermedium nach Art eines Siebs in der Flüssigkeit enthaltene Feststoffe zurückhält, während die von den Feststoffen befreite Flüssigkeit (Filtrat) durch das poröse Medium durchfließen kann. Die Filterwirkung solcher Filter beruht darauf, dass die Feststoff-Partikel größer sind als die Poren des Filters und deshalb nicht in das Filtermedium eindringen können. Bei diesen Filtern bildet sich auf dem porösen Filtermedium ein Filterkuchen mit zunehmender Dicke aus, der wiederum als dichter werdendes Filtermedium wirkt. Um den Filter zu regenerieren, muss der Filterkuchen regelmäßig entfernt werden. Durch das Anwachsen des Filterkuchens steigt der Strömungswiderstand des Filters während der Filtration immer weiter an, wodurch entweder die Strömungsgeschwindigkeit der Flüssigkeit beim Filtrieren verringert wird oder der Druck auf den Filter erhöht werden muss, um bei höherem Strömungswiderstand die Flüssigkeit mit gleicher Geschwindigkeit durch das Filtermedium zu pressen.

Aus dem Stand der Technik sind weiterhin Tiefenfilter bekannt, bei denen die Abscheidung von Feststoff-Partikeln nicht an der Oberfläche sondern im Innern des Filtermediums erfolgt. Daneben sind auch Querstromfilter bekannt, bei denen das Filtermedium quer zur Strömungsrichtung der zu filtrierenden Flüssigkeit angeordnet ist. Dabei wird durch Scherkräfte die Ausbildung eines Filterkuchens unterbunden. In Strömungsrichtung reichert sich eine konzentrierte Suspension an, welche zur Regenerierung des Querstromfilters abgeführt werden muss.

Als Filtermedien werden in den bekannten Filtern beispielsweise Filze, Textilmaterialien (bspw. Gewebe), Papier, poröse Festkörper oder auch gewickelte Filterkerzen aus unterschiedlichen Materialien verwendet.

Für die Sterilisation von Wasser müssen pathogene Mikroorganismen, insbesondere Viren und Bakterien filtriert werden, deren Größe im Bereich von 0,5 bis einigen Mikrometern liegt. Die Sterilisation von Wasser erfolgt bspw. bei der kommunalen Trinkwasseraufbereitung durch Ultrafiltration, wobei bspw. in einer "dead-end"-Filtration ein Wasserstrom mit einem Druck von ca. ca. 1 bar gegen eine UF-Membrane mit einem Partikelrückhalt im Bereich zwischen 2-100 nm gepumpt wird. Durch den permanenten Abfluss des Permeats reichert sich ein Filterkuchen aus den abzutrennenden Feststoffpartikeln auf der Membran an. Der Filterkuchen erhöht den Filtrationswiderstand und damit den Druckverlust über die Membran. Er muss in regelmäßigen Intervallen durch Rückspülung oder chemische Reinigungen entfernt werden. Die Ultrafiltration weist daher den Nachteil eines sehr hohen Strömungswiderstands auf und ist sehr wartungsintensiv. Auch bei einer Ultrafiltration im Querstromverfahren ist ein hoher Filterwiderstand von ca. 1 bar zu überwinden, da das Permeat die dünnen Poren des UV-Filtermaterials durchströmen muss. Dabei entsteht zusätzlich noch der Nachteil eines hohen Abwasseranteils, weil ein Teil des Wassers im Querstrom wegströmt.

Für die Filtration von Mikroorganismen aus Wasser ist aus der WO 03/000407 A1 ein Filtermaterial bekannt, welches einen elektropositiven Textilverbundstoff umfasst. Der Textilverbundstoff enthält ein Gemisch von Nanoaluminiumoxid-teilchen oder -fasern und einer Trägerstruktur, die Glasfasern umfasst. Aufgrund der elektropositiven Eigenschaften des Textilverbundmaterials, die im Wesentlichen durch das elektrokinetische Potenzial (Zeta-Potenzial) des Aluminiumoxids in wässriger Umgebung hervorgerufen werden, ist dieser Filter in der Lage elektronegative Teilchen, die in einer zu filtrierenden Flüssigkeit enthalten sind, durch Elektroadsorption zu binden und dadurch aus der Flüssigkeit zu entfernen. Der aus der WO 03/000407 A1 bekannte Textilverbundstofffilter wird an der Oberfläche einer Filtermembran oder als Filterbett angeordnet und die zu filtrierende Flüssigkeit, beispielsweise Wasser, wird durch die Membran bzw. das Filterbett geleitet. Dabei werden negativ geladene und in der Flüssigkeit enthaltene Teilchen mit einer Teilchengröße von weniger als 1 Mikrometer am Filtermaterial adsorbiert. Dadurch können beispielsweise Mikroorganismen, insbesondere Viren und Bakterien, aus der zu filtrierenden Flüssigkeit, insbesondere Wasser, entfernt werden, um die Flüssigkeit zu sterilisieren. Auch bei diesem Filter hat sich jedoch gezeigt, dass der Strömungswiderstand des Filters während der Filtration zunimmt.

Ein Fluidreinigungssystem mit einem elektropositiven Filtermaterial, insbesondere einem elektropositiven Textilverbundstoff, ist aus der US 2013/0056428 A1 bekannt.

Die US 2005/0023211 A1 zeigt ein Filtermedium mit einer Adsorberschicht zur Entfernung von Partikeln in der Größe von 3 bis 4 µm aus einem Fluid, wobei das flächige Filtermedium zu einem zylindrischen Wickelfilter aufgewickelt werden kann.

Hiervon ausgehend soll ein Filter zur Sterilisation von Wasser aufgezeigt werden, mit dem zuverlässig Mikroorganismen aus dem Wasser filtriert werden können, wobei der Filter auch bei längerer Dauer der Filtration einen möglichst geringen Strömungswiderstand und damit Druckverlust erzeugt.

Diese Aufgabe wird mit einem Filter mit den Merkmalen des Anspruchs 1 gelöst. Bevorzugte Ausführungsformen dieses Filters sind den abhängigen Ansprüchen zu entnehmen.

Der erfindungsgemäße Filter umfasst eine Mehrzahl von Lagen aus einem elektroaktiven Material, welches in wässriger Umgebung im pH-Bereich von 3 bis 8 ein positives elektrokinetisches Potential (Zeta-Potential) aufweist, wobei die Lagen durch Abstandshalter voneinander getrennt sind, wodurch zwischen benachbarten Lagen des Filters eine Mehrzahl von zumindest im Wesentlichen parallel zueinander und in einer Längsrichtung des Filters verlaufende Kanäle ausgebildet sind, die zumindest im Wesentlichen parallel zueinander und in einer Längsrichtung des Filters verlaufend und jeweils einen Kanaleingang und einen Kanalausgang aufweisen und zumindest teilweise von dem elektroaktiven Material begrenzt werden. Im Betrieb des Filters wird das zu filtrierende Wasser durch die Kanäle geleitet, so dass das Wasser die Kanäle jeweils vom Kanaleingang zum Kanalsausgang durchströmt, ohne das elektroaktive Material zu durchströmen. Dabei werden im Wasser enthaltene Mikroorganismen, insbesondere Viren und Bakterien, wie z.B. Salmonellen und Legionellen, und ggf. deren Nährstoffe durch Elektroadsorption am elektroaktiven Filtermaterial angelagert und so aus dem Wasser entfernt. Das Wasser strömt dabei durch die Kanäle des Filters, ohne das die Kanäle begrenzende Material zu durchströmen. Dadurch wird ein äußerst geringer Strömungswiderstand erzeugt, weil das zu filtrierende Wasser weitgehend ungehindert in Längsrichtung durch die Kanäle strömen kann und nicht durch ein ggf. bereits mit abgeschiedenen Partikeln verstopftes Filtermaterial strömen muss.

Die Anlagerung der Mikroorganismen am elektroaktiven Material erfolgt durch Elektroadsorption, welche aufgrund der elektroaktiven Eigenschaften des elektroaktiven Materials, insbesondere dessen elektrokinetischem Potenzial (Zeta-Potenzial) ermöglicht wird. Hierfür enthält das elektroaktive Material, welches die Kanäle des Filters zumindest teilweise begrenzt, Substanzen mit einem elektrokinetischen Potenzial in wässriger Umgebung. Beispielsweise enthält das elektroaktive Material ein Metalloxid, insbesondere Aluminiumoxid und/oder Aluminiumhydroxid (Al(OH)₃) und/oder Böhmit (eine Modifikation von Aluminiumhydroxid mit der chemischen Zusammensetzung AlO(OH)) und/oder Zirkonoxid. Es ist bekannt, dass diese Materialien in wässriger Umgebung, und insbesondere im pH-Bereich von 3 - 8, ein elektrokinetisches Potenzial besitzen und dadurch in der Lage sind, negativ geladene Teilchen und Partikel durch Elektroadsorption zu binden. Dadurch können die aufgrund ihrer Zellwandstruktur in der Regel negativ geladenen Mikroorganismen im Wasser an dem elektroaktiven Material des erfindungsgemäßen Filters adsorbiert werden. Es hat sich in überraschender Weise gezeigt, dass es zur Elektroadsorption von Mikroorganismen ausreicht, das mit Mikroorganismen belastete Wasser durch die Kanäle des erfindungsgemäßen Filters zu leiten, ohne dass das Wasser die Kanalwandungen durchströmt. Dadurch erzeugt der erfindungsgemäße Filter nur einen sehr kleinen Strömungswiderstand.

Als besonders zweckmäßig hat es sich erwiesen, das elektroaktive Materialals elektropositiven Textil-Verbundstoff auszubilden, der insbesondere ein Gemisch von Mikro- oder Nanoteilchen oder Fasern eines Metalloxids, wie z.B. Aluminiumoxid oder Aluminiumhydroxid oder Böhmit, sowie ein faseriges Trägermaterial, beispielsweise aus Polymer-, Carbon- oder Glasfasern, enthält oder vollständig aus einem solchen Gemisch besteht. Besonders zweckmäßig ist dabei ein Gemisch aus Aluminiumoxid- oder Aluminiumhydroxid- oder BöhmitFasern mit einem Faserdurchmesser im Bereich von wenigen Nanometern bis zu 10 µm und einem faserigen Trägermaterial, bspw. ein Faservlies aus Carbon- oder Glasfasern. Als besonders geeignet haben sich dabei aluminiumhaltige Fasern mit einem Durchmesser im Nanometerbereich und insbesondere im Bereich von 2 bis 100 nm und einem Verhältnis von Länge zu Durchmesser von mehr als 5 erwiesen.

Um (auch) positiv geladene Teilchen aus dem Wasser am Filter zu adsorbieren, ist es zweckmäßig, wenn das elektroaktive Material zusätzlich ein Silikat, insbesondere Aluminium- oder Calzium-Silikat enthält. Solche Silikate weisen in wässriger Umgebung ein negatives elektrokinetisches Potenzial auf und sind deshalb in der Lage, positiv geladene Teilchen aus der Flüssigkeit durch Elektroadsorption an dem Textilmaterial des erfindungsgemäßen Filters zu binden.

In einer bevorzugten Ausführungsform des erfindungsgemäßen Filters ist dieser als Wickelfilter ausgebildet und wird durch Wickeln eines flächigen Textilmaterials hergestellt. Dabei wird zweckmäßig das flächige Textilmaterial zu einem Zylinder mit offenen Stirnseiten gewickelt. Die offenen Stirnseiten des Zylinders bilden dabei die Kanaleingänge bzw. die Kanalausgänge der Kanäle des Filters. Um eine hohe effektive Filterfläche zu erzeugen, ist es zweckmäßig, wenn der zylindrisch ausgebildete Wickelfilter eine Zylinderlänge L aufweist, welche größer ist als der Zylinderdurchmesser.

Der Wickelfilter setzt sich dabei bevorzugt aus aufgewickelten und dadurch übereinander liegenden Lagen eines flächigen und elektroaktiven Textilmaterials zusammen, welche durch Abstandshalter voneinander getrennt sind. Zwischen benachbarten Lagen des Wickelfilters sind die Abstandshalter angeordnet und erstrecken sich dabei in Längsrichtung des Filters. Dadurch werden zwischen benachbarten Lagen des Wickelfilters und den Abstandshaltern Kanäle ausgebildet, die sich in Längsrichtung des Filters erstrecken und zumindest im Wesentlichen parallel zueinander verlaufen. Bei den Abstandshaltern kann es sich um längliche, beispielsweise stabförmige Abstandshalter handeln, die in Längsrichtung des Filters angeordnet sind. Bevorzugt weisen die Abstandshalter eine wellenförmige oder eine zick-zack-förmige Struktur auf ähnlich der Struktur einer Wellpappe.

Erfindungsgemäss sind die Abstandshalter dabei ebenso wie die Lagen des Wickelfilters aus dem elektroaktiven Material gefertigt. Dadurch wird gewährleistet, dass die Kanäle des Filters allseitig von Kanalwänden begrenzt werden, die durch ein in wässriger Umgebung elektroaktives Material (d.h. durch ein Material mit einem elektrokinetischen Zeta-Potenzial), begrenzt werden. Auf diese Weise wird eine große effektive und aktive Filterfläche bereitgestellt. Insgesamt wirkt der erfindungsgemäße Filter dabei als Tiefenfilter, d.h. die Abscheidung der Teilchen (Mikroorganismen) erfolgt durch Elektroadsorption am elektroaktiven Filtermaterial im Innern des Filtermediums.

Als besonders zweckmäßig hat es sich erwiesen, wenn die Länge der Kanäle in Längsrichtung des Filters wesentlich größer ist als der Kanaldurchmesser, wobei das Verhältnis von Kanallänge zu Kanaldurchmesser wenigstens 10 und bevorzugt mehr als 100 beträgt.

Typische Werte für die Länge der Kanäle liegen zwischen 10 cm und 50 cm und der Kanaldurchmesser liegt beispielsweise im Bereich von 0,1 cm bis 5 cm.

Zur einfacheren Handhabung des erfindungsgemäßen Filters, beispielsweise beim Einsetzen des Filters in eine Filteranordnung und zum Austausch eines verbrauchten Filters, hat es sich als zweckmäßig erwiesen, den Wickelfilter in einem rohr- oder quaderförmigen Gehäuse aus einem wasserdichten Material anzuordnen.

Diese und weitere Vorteile der Erfindung ergeben sich aus dem nachfolgend unter Bezugnahme auf die begleitenden Zeichnungen näher beschriebenen Ausführungsbeispiel. Die Zeichnungen zeigen:
- **Figur 1:**: Schematische Darstellung eines erfindungsgemäßen Filters im aufgewickelten Zustand in einer Vorderansicht (Figur 1a), einer perspektivischen Ansicht (Figur 1b) und einer Detailansicht (Figur 1c);
- **Figur 2:**: Schematische Darstellung einer als Wickelfilter ausgebildeten Ausführungsform eines erfindungsgemäßen Filters in einer perspektivischen Ansicht (Figur 2a) und einer weiteren Ausführungsform eines solchen Wickelfilters mit einem Gehäuse (Figur 2b);

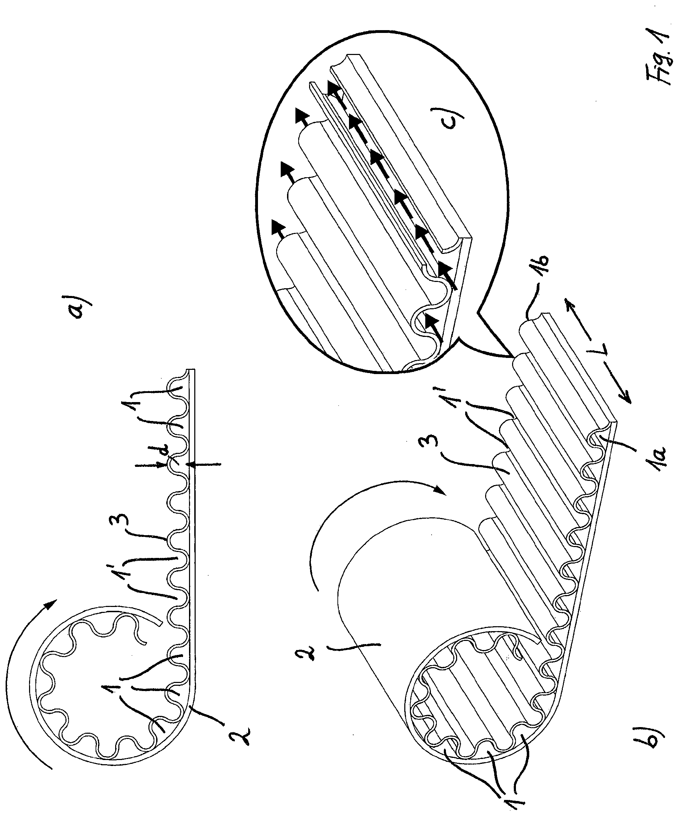

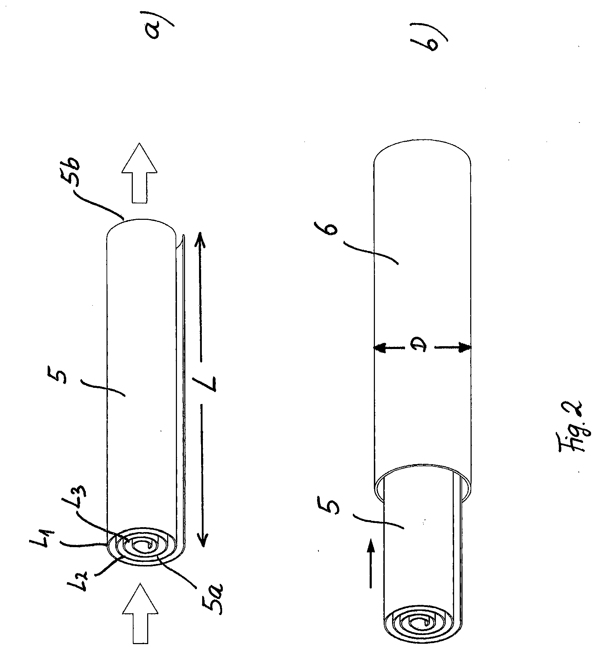

Wie in Figur 1 gezeigt wird zur Herstellung eines erfindungsgemäßen Filters ein flächiges Textilmaterial 2, beispielsweise ein Textilgewebe, ein Faserfilz oder ein Faservlies, verwendet und - wie in den Figuren 1a und 1b angedeutet - rollenförmig zu einem Zylinder 5 (Figur 2) aufgewickelt. Auf einer Seite des flächigen Textilmaterials 2 sind dabei Abstandshalter 3 angeordnet. In dem in Figur 1 gezeigten Ausführungsbeispiel weisen die Abstandshalter 3 eine wellenförmige Struktur auf, ähnlich wie bei einer Wellpappe. Es sind jedoch auch andere Ausgestaltungen von Abstandshaltern möglich, wie z.B. eine zick-zack-förmige Struktur oder stabförmige Abstandshalter, welche auf der Oberfläche des flächigen Textilmaterials 2 im Abstand zueianander angeordnet und befestigt sind und welche sich in Längsrichtung L des Filters erstrecken. Zwischen den Abstandshaltern 3 und dem flächigen Textilmaterial 2 sind Kanäle 1 ausgebildet, die in Längsrichtung L des Filters verlaufen und jeweils einen offenen Kanaleingang 1a und einen offenen Kanalausgang 1b aufweisen. Entsprechend bilden sich beim Aufwickeln des flächigen Textilmaterials 2 mit den Abstandshaltern 3 auch zwischen den Abstandshaltern 3 und einer darauf aufliegenden Lage L1, L2 des Textilmaterials 2 entsprechende Kanäle 1' aus.

Nach dem Aufwickeln sind benachbarte Lagen L1, L2 (Figur 2) des aufgewickelten Wickelfilters durch die Abstandshalter 3 voneinander getrennt, wodurch in der Wickelfilterstruktur eine Mehrzahl von zumindest im Wesentlichen parallel zueinander verlaufenden und sich in Längsrichtung L des Filters erstreckende Kanäle 1, 1' ausgebildet werden. Die Stirnseiten 5a, 5b des aufgewickelten Wickelfilters (Zylinder 5, Figur 2) sind offen und bilden dadurch offene Kanaleingänge 1a an der einen Stirnseite 5a des Zylinders 5 bzw. offene Kanalausgänge 1b an der gegenüberliegenden Stirnseite 5b aus. Die Länge L der Kanäle 1 in Längsrichtung des Filters ist bevorzugt wesentlich größer als der Kanaldurchmesser d. Der Kanaldurchmesser d liegt dabei zweckmäßig zwischen 0,1 cm und 5 cm und die Länge L der Kanäle 1 in Längsrichtung liegt bevorzugt zwischen 10 cm und 50 cm.

Bei dem Textilmaterial 2 handelt es sich um ein elektroaktives Material, insbesondere um einen elektropositiven Textil-Verbundstoff. Das Textilmaterial 2 enthält bspw. zur Ausbildung eines positiven elektrokinetischen Potentials (Zeta-Potential) ein Metalloxid, beispielsweise Aluminiumoxid und/oder Aluminiumhydroxid und/oder Böhmit oder Zirkonoxid. Als besonders geeignet hat sich ein Textilmaterial 2 in Form eines Textil-Verbundstoffs erwiesen, welches ein Gemisch von Mikro- oder Nanoteilchen oder -fasern eines Metalloxids mit einem faserigen Trägermaterial enthält. Bei dem faserigen Trägermaterial kann es sich beispielsweise um ein Faservlies aus Polymer-, Carbon- oder Glasfasern handeln. Das Textilmaterial 2 kann auch vollständig aus einem Gemisch aus Metalloxid-Fasern und dem faserigen Trägermaterial bestehen. Zusätzlich kann das Textilmaterial 2 auch noch ein Silikat mit einem negativen elektrokinetischen Potenzial enthalten.

Im erfindungsgemäßen Filter sind auch die Abstandshalter 3 aus einem solchen elektroaktiven Material gebildet. Dadurch sind die Kanäle 1 vollständig von einem elektroaktiven Material umgeben, nämlich einerseits von dem flächigen Textilmaterial 2 und andererseits von den ebenfalls aus einem elektroaktiven Material gebildeten Abstandshaltern 3.

Zur Erzeugung einer möglichst großen effektiven Filterfläche ist es zweckmäßig, das flächige Textilmaterial 2 mit den darauf angeordneten Abstandshaltern 3 zu einem Zylinder 5 aufzuwickeln (Figur 2) und dadurch einen Wickelfilter herzustellen, wobei bevorzugt die Zylinderlänge L größer ist als der Zylinderdurchmesser D. In einem bevorzugten Ausführungsbeispiel wird der aufgewickelte Zylinder 5 (Wickelfilter) in ein rohr- oder quaderförmiges Gehäuse 6 eingesetzt, wie in Figur 2b gezeigt, wobei die Gehäusewand zweckmäßig aus einem wasserdichten Material gefertigt ist.

Der erfindungsgemäße Filter eignet sich in hervorragender Weise zur Sterilisation von Wasser, denn er ist in der Lage, in dem Wasser enthaltene Mikroorganismen durch Elektroadsorption an dem elektroaktiven Material (insbesondere dem Textilmaterial 2 und an den Abstandshaltern 3 anzulagern und dadurch aus dem Wasser zu entfernen. Das zu filtrierende Wasser kann dabei weitgehend ungehindert durch die Kanäle 1 vom jeweiligen Kanaleingang 1a zum Kanalausgang 1b strömen, ohne die Wandungen der Kanäle 1 zu durchströmen. Dadurch erzeugt der erfindungsgemäße Filter nur einen niedrigen Strömungswiderstand und deshalb nur einen geringen Druckverlust. Der Filter kann dabei auch Nährstoffe für Mikroorganismen am elektroaktiven Filtermaterial adsorbieren, wie z.B. Polysaccharide und extrazelluläre Substanzen, und kann auch dadurch zu einer Sterilistation des behandelten Wassers beitragen, weil zumindest ein ungehindertes Wachstum von Mikroorganismen aufgrund eines Nährstoffmangels verhindert werden kann.

Zur Regeneration des Filters kann dieser thermisch behandelt werden, beispielsweise durch Erhitzen auf Temperaturen von mehr als 70°C oder auch durch eine Sterilisierung in einem (Dampf-)Sterilisator. Dadurch werden Mikroorganismen, die sich beim Filtrieren an dem elektroaktiven Textilmaterial angelagert haben, abgetötet und aus dem Filter entfernt. Eine Regenerierung des Filters kann auch chemisch (bspw. durch Einleiten eines Desinfektionsmittels oder einer Base zur Erhöhung des pH-Werts und dadurch Reduzierung des Zeta-Potentials des elektroaktiven Textilmaterials), elektrochemisch oder durch Spülen mit einer Spüllösung erfolgen.

Die Erfindung ist nicht auf das hier zeichnerisch dargestellte Ausführungsbeispiel beschränkt. So kann der Filter bspw. statt als Wickelfilter auch als Schichtfilter mit übereinander angeordneten ebenen Lagen eines flächigen und elektroaktiven Materials, insbesondere eines flächigen Textilmaterials, ausgebildet sein. Auch in diesem Ausführungsbeispiel werden die zwischen den übereinander liegenden ebenen Lagen ausgebildeten Kanäle von dem zu sterilisierenden Wasser in Kanallängsrichtung durchströmt.

## Patentansprüche

1. Filter zur Sterilisation von Wasser, welcher eine Mehrzahl von Lagen (L1, L2) aus einem elektroaktiven Material (2, 3) umfasst, welches in wässriger Umgebung im pH-Bereich von 3 bis 8 ein positives elektrokinetisches Potential (Zeta-Potential) aufweist, wobei die Lagen (L1, L2) aus einem flächigen Textilmaterial (2) sind und durch Abstandshalter (3), welche zwischen benachbarten Lasen (1. 2) angeordnet sind, voneinander getrennt sind, wodurch zwischen benachbarten Lagen (L1, L2) des Filters eine Mehrzahl von zumindest im Wesentlichen parallel zueinander und in einer Längsrichtung des Filters verlaufende Kanäle (1) ausgebildet sind, die jeweils einen Kanaleingang (1a) und einen Kanalausgang (1b) aufweisen und zumindest teilweise von dem elektroaktiven Material (2, 3) begrenzt werden, wobei das zu filtrierende Wasser beim Betrieb des Filters in Längsrichtung (L) jeweils vom Kanaleingang (1a) zum Kanalausgang (1b) durch die Kanäle (1) strömt ohne das elektroaktive Material (2, 3) zu durchströmen und dabei im Wasser enthaltene Mikroorganismen durch Elektroadsorption am elektroaktiven Material (2, 3) angelagert werden, **dadurch gekennzeichnet, dass** die Abstandshalter (3) aus einem elektroaktiven Material gefertigt sind-.

2. Wasserfilter nach einem der voranstehenden Ansprüche, **dadurch gekennzeichnet, dass** es sich bei dem elektroaktiven Material (2, 3) um einen elektropositiven Textil-Verbundstoff handelt.

3. Wasserfilter nach einem der voranstehenden Ansprüche, **dadurch gekennzeichnet, dass** das elektroaktive Material (2, 3) ein Metalloxid. insbesondere Aluminiumoxid und/oder Aluminumhydroxid und/oder Böhmit und oder Zirkonoxid enthält.

4. Wasserfilter nach einem der voranstehenden Ansprüche, **dadurch gekennzeichnet, dass** das elektroaktive Material (2, 3) ein Gemisch von Mikro- oder Nanoteilchen oder -Fasern eines Metalloxids mit einem faserigen Trägermaterial, insbesondere aus Polymer-, Carbon- oder Glasfasern oder einer Mischung davon, enthält oder aus einem solchen Gemisch besteht.

5. Wasserfilter nach einem der voranstehenden Ansprüche, **dadurch gekennzeichnet, dass** das elektroaktive Material (2, 3) ein Silikat, insbesondere Aluminium- oder Calcium-Silikat, enthält.

6. Wasserfilter nach einem der voranstehenden Ansprüche, **dadurch gekennzeichnet, dass** der Filter im Wesentlichen zylindrisch ist, wobei die Zylinderlänge (L) größer als der Zylinderdurchmesser (D) ist.

7. Wasserfilter nach einem der voranstehenden Ansprüche, **dadurch gekennzeichnet, dass** der Filter im Wesentlichen zylindrisch ist und die Stirnseiten (5a, 5b) des Zylinders (5) zur Ausbildung der Kanaleingänge (1a) und der Kanalausgänge (1b) offen sind.

8. Wasserfilter nach Anspruch 1, **dadurch gekennzeichnet, dass** die Lagen (L1, L2) des Filters mit den dazwischen angeordneten Abstandshaltern (3) in einem rohr- oder quaderförmigen Gehäuse (6) aus einem wasserdichten Material angeordnet sind.

9. Wasserfilter nach einem der voranstehenden Ansprüche, **dadurch gekennzeichnet, dass** der Filter als Wickelfilter ausgebildet und durch Wickeln des flächigen Textilmaterials (2) hergestellt ist.

10. Wasserfilter nach einem der voranstehenden Ansprüche **dadurch gekennzeichnet, dass** die Abstandshalter (3) eine wellenförmige oder eine zick-zack-förmige Struktur aufweisen.

11. Wasserfilter nach einem der voranstehenden Ansprüche, **dadurch gekennzeichnet, dass** die Länge (L) der Kanäle (1) in Längsrichtung des Filters wesentlich größer ist als der Kanaldurchmesser (d), wobei das Verhältnis von Kanallänge (L) zu Kanaldurchmesser (d) wenigstens 10 und bevorzugt mehr als 100 beträgt.

12. Wasserfilter nach einem der voranstehenden Ansprüche, **dadurch gekennzeichnet, dass** die Länge (L) der Kanäle (1) in Längsrichtung des Filters zwischen 10 und 50 cm und der Kanaldurchmesser (d) zwischen 0,1 und 5 cm liegt.

## Claims

1. Filter for the sterilisation of water, which comprises a plurality of layers (LI, L2) of an electroactive material (2, 3) which has a positive electrokinetic potential (zeta potential) in an aqueous environment within a pH range from 3 to 8, wherein the layers (LI, L2) are of a flat textile material (2) and are separated from each other by spacers (3) which are arranged between adjacent layers (LI, L2), as a result of which between adjacent layers (LI, L2) of the filter are formed a plurality of channels (1) which run at least substantially parallel to each other and in the longitudinal direction of the filter and which each have a channel input (1a) and a channel output (1b) and are at least partially limited by the electroactive material (2, 3), wherein during operation of the filter the water to be filtered flows through the channels (1) from the channel input (1a) to the channel output (1b) without flowing through the electroactive material (2, 3), whereby microorganisms contained in the water are adsorbed by electroadsorption on the electroactive material (2, 3), **characterised in that** the spacers (3) are made from an electroactive material.

2. Water filter according to claim 1, **characterised in that** the electroactive material (2, 3) is an electropositive textile composite.

3. Water filter according to one of the preceding claims, **characterised in that** the electroactive material (2, 3) contains a metal oxide, in particular aluminium oxide and/or aluminium hydroxide and/or boehmite and/or zirconium oxide.

4. Water filter according to one of the preceding claims, **characterised in that** the electroactive material (2, 3) contains a mixture of micro- or nanoparticles or -fibres of a metal oxide with a fibrous carrier material, in particular polymer, carbon or glass fibres or a mixture thereof, or consists of such a mixture.

5. Water filter according to one of the preceding claims, **characterised in that** the electroactive material (2, 3) contains a silicate, in particular aluminium or calcium silicate.

6. Water filter according to one of the preceding claims, **characterised in that** the filter is substantially cylindrical, wherein the cylinder length (L) is greater than the cylinder diameter (D).

7. Water filter according to one of the preceding claims, **characterised in that** the filter is substantially cylindrical and the end faces (5a, 5b) of the cylinder (5) are open to form the channel inputs (1a) and the channel outputs (1b).

8. Water filter according to claim 1, **characterised in that** the layers (LI, L2) of the filter with the spacers (3) arranged therebetween are arranged in a tubular or cuboid housing (6) made of a watertight material.

9. Water filter according to one of the preceding claims, **characterised in that** the filter is designed as a wound filter and is made by winding the flat paper or textile material (2).

10. Water filter according to one of claims 8 to 10, **characterised in that** the spacers (3) have an undulating or zigzag-shaped structure.

11. Water filter according to one of the preceding claims, **characterised in that** the length (L) of the channels (1) in the longitudinal direction of the filter is substantially greater than the channel iameter (d), wherein the ratio of channel length (L) to channel diameter (d) is at least 10 and preferably more than 100.

12. Water filter according to one of the preceding claims, **characterised in that** the length (L) of the channels (1) in the longitudinal direction of the filter is between 10 and 50 cm and the channel diameter (d) is between 0.1 and 5 cm.

## Revendications

1. Filtre de stérilisation d'eau comprenant une pluralité de couches (Ll, L2) en un matériau électro-actif (2, 3) qui présente en environnement aqueux un potentiel électrocinétique positif (potentiel zéta) dans la plage de pH de 3 à 8, dans lequel les couches (Ll, L2) sont en un matériau plan en textile (2) et sont séparées les unes des autres par des écarteurs (3), lesquels sont agencés entre des couches adjacentes (1, 2), par quoi entre des couches adjacentes (Ll, L2) du filtre, une pluralité de canaux (1) au moins sensiblement parallèles les uns aux autres et passant dans une direction longitudinale du filtre sont formés, qui présentent respectivement une entrée de canal (1a) et une sortie de canal (1b) et sont délimités au moins en partie par le matériau électro-actif (2, 3), dans lequel l'eau à filtrer, lors du fonctionnement du filtre, s'écoule à travers les canaux (1) dans la direction longitudinale (L) respectivement de l'entrée de canal (1a) à la sortie de canal (1b) sans traverser le matériau électro-actif (2, 3) et des microorganismes contenus dans l'eau sont alors fixés sur le matériau électro-actif (2, 3) par électro-adsorption, **caractérisé en ce que** les écarteurs (3) sont fabriqués en un matériau électro-actif.

2. Filtre à eau selon l'une des revendications précédentes, **caractérisé en ce qu'**il s'agit pour le matériau électro-actif (2, 3) d'un matériau composite en textile électropositif.

3. Filtre à eau selon l'une des revendications précédentes, **caractérisé en ce que** le matériau électro-actif (2, 3) contient un oxyde de métal, en particulier de l'oxyde d'aluminium et/ou de l'hydroxyde d'aluminium et/ou de la boehmite et/ou de l'oxyde de zircon.

4. Filtre à eau selon l'une des revendications précédentes, **caractérisé en ce que** le matériau électro-actif (2, 3) contient un mélange de micro- ou nanoparticules ou de micro- ou nano-fibres d'un oxyde de métal avec un matériau support fibreux, en particulier en fibres de polymère, de carbone ou de verre ou en un mélange de celles-ci, ou se compose d'un tel mélange.

5. Filtre à eau selon l'une des revendications précédentes, **caractérisé en ce que** le matériau électro-actif (2, 3) contient un silicate, en particulier un silicate d'aluminium ou de calcium.

6. Filtre à eau selon l'une des revendications précédentes, **caractérisé en ce que** le filtre est sensiblement cylindrique, dans lequel la longueur du cylindre (L) est supérieure au diamètre du cylindre (D).

7. Filtre à eau selon l'une des revendications précédentes, **caractérisé en ce que** le filtre est sensiblement cylindrique et les façades (5a, 5b) du cylindre (5) sont ouvertes en vue de la formation des entrées de canal (1a) et des sorties de canal (1b).

8. Filtre à eau selon la revendication 1, **caractérisé en ce que** les couches (Ll, L2) du filtre sont disposées avec les écarteurs (3) disposés entre celles-ci dans un boîtier tubulaire ou parallélépipédique (6) en un matériau étanche à l'eau.

9. Filtre à eau selon l'une des revendications précédentes, **caractérisé en ce que** le filtre est formé comme un filtre à enroulement et est réalisé par des enroulements du matériau plan en papier ou en textile (2) .

10. Filtre à eau selon l'une des revendications précédentes, **caractérisé en ce que** les écarteurs (3) présentent une structure en forme d'ondes ou de zigzag.

11. Filtre à eau selon l'une des revendications précédentes, **caractérisé en ce que** la longueur (L) des canaux (1) dans la direction longitudinale du filtre est nettement supérieure au diamètre des canaux (d), dans lequel le rapport de la longueur de canal (L) sur le diamètre de canal (d) est d'au moins 10 et de préférence de plus de 100.

12. Filtre à eau selon l'une des revendications précédentes, **caractérisé en ce que** la longueur (L) des canaux (1) dans la direction longitudinale du filtre se situe entre 10 et 50 cm et le diamètre de canal (d) entre 0,1 et 5 cm.
